(19) Europäisches Patentamt
European Patent Office
Office européen des brevets

(11) **EP 4 459 514 A1**

(12) **EUROPEAN PATENT APPLICATION**
published in accordance with Art. 153(4) EPC

(43) Date of publication:
**06.11.2024  Bulletin 2024/45**

(21) Application number: **21969944.4**

(22) Date of filing: **27.12.2021**

(51) International Patent Classification (IPC):
***G06N 20/00*** (2019.01)

(52) Cooperative Patent Classification (CPC):
**G06N 20/00**

(86) International application number:
**PCT/JP2021/048702**

(87) International publication number:
**WO 2023/127062 (06.07.2023 Gazette 2023/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventor: **KODA, Satoru**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **DATA GENERATION METHOD, MACHINE LEARNING METHOD, INFORMATION PROCESSING DEVICE, DATA GENERATION PROGRAM, AND MACHINE LEARNING PROGRAM**

(57) Pseudo data and pseudo label data for the pseudo data are generated, and the pseudo data is updated in such a direction as to reduce a loss of an output obtained by inputting the pseudo data to a machine learning model, to generate out-of-distribution data. In this manner, out-of-distribution data can be efficiently generated.

FIG. 3

INITIAL STATE
CLASSIFIER C IS TRAINED. OOD IS RANDOMLY GENERATED

OOD UPDATE 1
OOD IS UPDATED IN SUCH DIRECTIONS AS TO REDUCE LOSS L

CLASSIFIER UPDATE 1
CLASSIFIER C IS UPDATED SO AS TO RECOGNIZE UPDATED OOD AS OOD

OOD UPDATE 2
OOD IS UPDATED IN SUCH DIRECTIONS AS TO REDUCE LOSS L, FOR UPDATED CLASSIFIER

FINAL STATE
MULTIPLE PIECES OF OOD ARE GENERATED (INCLUDING OOD IN OPTIMIZATION PROCESS). FINAL ADJUSTMENT IS PERFORMED ON CLASSIFIER, USING TRAINING DATA AND OOD DATA.

**Description**

FIELD

The present disclosure relates to a data generation method, a machine learning method, an information processing apparatus, a data generation program, and a machine learning program.

BACKGROUND

A large number of security applications using machine learning have been developed. A machine learning model normally assumes that the data to be used for training and the data to be input at the time of testing are generated from the same distribution. However, with data that is used in the security industry, this assumption is often untrue, and data is input from a distribution that was not taken into consideration at the time of training (from outside the distribution). Data from outside the distribution may be referred to as out-of-distribution data. Also, the outside of the distribution may be referred to as out-of-distribution (OOD).

Models that are vulnerable to the outside of the distribution are incapable of recognizing out-of-distribution for them, and therefore, applications might fail to recognize new threats.

To enhance robustness for out-of-distribution data, a technique of training a machine learning model using out-of-distribution data is known. The out-of-distribution data to be used for this training is acquired from a third party or is generated in a pseudo manner, for example.

SUMMARY

TECHNICAL PROBLEM

However, out-of-distribution data that is acquired/generated by such a conventional technique is limited, and therefore, there is the problem of vulnerabilities remaining in the models.

In one aspect, the present disclosure aims to enable efficient generation of out-of-distribution data.

SOLUTION TO PROBLEM

Therefore, this data generation method includes: generating pseudo data and pseudo label data for the pseudo data; and updating the pseudo data in such a direction as to reduce a loss of an output obtained by inputting the pseudo data to a machine learning model, to generate out-of-distribution data not included in a specific domain.

ADVANTAGEOUS EFFECTS OF INVENTION

According to an embodiment, out-of-distribution data can be efficiently generated.

BRIEF DESCRIPTION OF DRAWINGS

FIG. 1 is a diagram schematically illustrating the functional configuration of an information processing apparatus as an example of a first embodiment.
FIG. 2 is a diagram illustrating a method of updating OOD samples in the information processing apparatus as an example of the first embodiment.
FIG. 3 is a diagram illustrating an example of the process of generating OOD samples in the information processing apparatus as an example of the first embodiment.
FIG. 4 is a diagram illustrating an example algorithm for processes to be performed by an OOD data generation unit of the information processing apparatus as an example of the first embodiment.
FIG. 5 is a diagram illustrating results of simulations of OOD data generation processes by the OOD data generation unit of the information processing apparatus as an example of the first embodiment.
FIG. 6 is a diagram illustrating results of simulations of OOD data generation processes by the OOD data generation unit of the information processing apparatus as an example of the first embodiment.
FIG. 7 is a diagram schematically illustrating an OOD generation model included in an information processing apparatus as an example of a second embodiment.
FIG. 8 is a diagram schematically illustrating the functional configuration of the information processing apparatus as an example of the second embodiment.

FIG. 9 is a diagram illustrating an example algorithm of an optimization process for an OOD generation model in the information processing apparatus as an example of the second embodiment.

FIG. 10 is a diagram illustrating an example of the hardware configuration of an information processing apparatus as an example of the first embodiment and the second embodiment.

DESCRIPTION OF EMBODIMENTS

In the description below, embodiments related to a data generation method, a machine learning method, an information processing apparatus, a data generation program, and a machine learning program will be described with reference to the drawings. Note that the embodiments described below are merely examples, and there is no intention to exclude adoption of various modifications and techniques not explicitly described in the embodiments.

In other words, the embodiments may be modified in various manners (such as combining embodiments and the respective modifications) and be implemented in a range without departing from the scope thereof. Further, each drawing is not intended to include only the components illustrated in the drawing, but may include other functions and the like.

First Embodiment

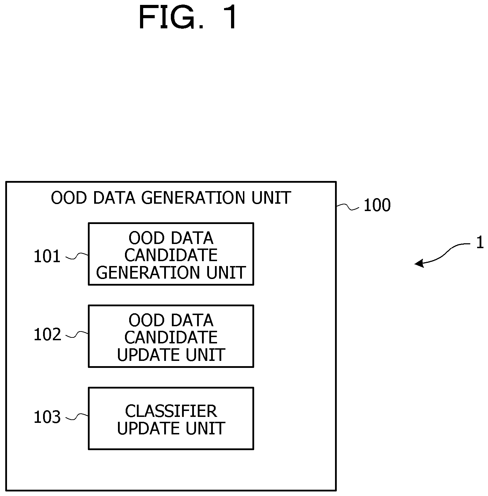

FIG. 1 is a diagram schematically illustrating the functional configuration of an information processing apparatus 1 as an example of a first embodiment.

The information processing apparatus 1 has functions as an OOD data generation unit 100.

The OOD data generation unit 100 generates out-of-distribution (OOD) data used for training of a class determination model (machine learning model) (not illustrated in the drawing), and exploratorily generates OOD data that is difficult for a classifier of the machine learning model to recognize. The out-of-distribution data is data that is not included in a specific domain.

The machine learning model is a class determination model that determines the class (domain) of data that has been input, and includes the classifier. The classifier performs classification of input data. The classifier calculates a certainty factor of each class among a plurality of classes with respect to data that has been input, and determines that the data belongs to the class having the highest certainty factor. The classes correspond to domains.

The classifier may be denoted by reference sign C. Also, the OOD data to be generated by the OOD data generation unit 100 may be referred to as an OOD sample.

Further, the OOD data is input to a discriminator (not illustrated in the drawing). The discriminator is for determining whether input data is IND or OOD, and may output a value representing the closeness to IND data. The discriminator may be denoted by reference sign D.

In the example described below, the data to be processed is image data, and the OOD data generation unit 100 generates image data as the OOD data.

With the current classifier, the OOD data generation unit 100 generates an OOD samples x^ that has a high certainty factor and are unlike IND samples. The OOD data generation unit 100 generates OOD samples x^ expressed by the following mathematical formula (1).

[Math. 1]

$$\mathrm{x}^{\wedge} = \operatorname*{argmin}_{x \in X} \; L(\boldsymbol{x}, t) = \alpha L_c(\boldsymbol{x}, t) - (1 - \alpha) L_d(\boldsymbol{x}) \quad \cdot \cdot \cdot (1)$$

In the above mathematical formula (1), $L_c(x, t)$ represents the loss function related to the classifier ($X \rightarrow Y$). $L_c(x, t)$ may represent a cross entropy loss, for example. The smaller the value of $L_c(x, t)$, the higher the probability that the sample x belongs to the target class t.

Further, $L_d(x)$ represents the loss function related to the discriminator ($X \rightarrow R$). R represents a set of entire real numbers. $L_d(x)$ may represent a DeepSVDD loss, for example. $L_d(x)$ can be expressed by the following mathematical formula (2), for example.

[Math. 2]

$$L_d(\boldsymbol{x}) = \|\phi_d(\boldsymbol{x}) - c_0\|_2^2 \quad \cdot \cdot \cdot (2)$$

In the above mathematical formula (2), $\Phi_d$ represents the feature extractor, and $c_0$ represents the center of gravity.

$L_d(x)$ may represent the L2 distance to IND on X. The greater the value of $L_d(x)$ is, the more different the sample is from an IND sample.

Here, $\alpha$ is a parameter (hyperparameter) for adjusting the trade-off between $L_c(x, t)$ and $L_d(x)$, and $\alpha \in [0, 1]$. The OOD data generation unit 100 adjusts the parameter $\alpha$ and optimizes the trade-off between $L_c(x, t)$ and $L_d(x)$, to generate an OOD sample that the classifier is not good at identifying.

For optimization of a, a known optimization technique such as a gradient descent method, a genetic algorithm (GA), or a generative adversarial network (GAN) may be used, and may be modified as appropriate prior to implementation.

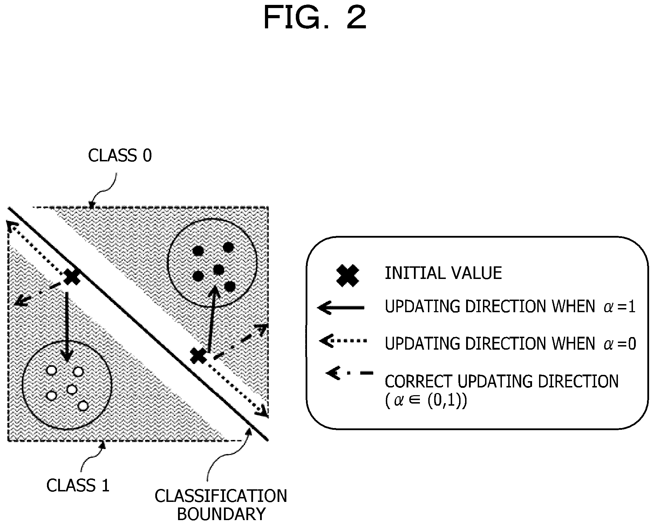

FIG. 2 is a diagram illustrating a method of updating OOD samples x^ in the information processing apparatus 1 as an example of the first embodiment.

In FIG. 2, shaded regions located at positions facing each other with a classification boundary interposed therebetween each indicate a region with a high certainty factor. In the regions where the certainty factor is high, the certainty factor is higher at a portion farther from the classification boundary. Also, the loss L is smaller at a portion farther from the classification boundary. Each point indicated by a black circle indicates an IND sample of class 0, and each point indicated by a white circle indicates an IND sample of class 1. The points denoted by x indicate the initial values of OOD samples.

Further, solid arrows indicate the updating directions of OOD samples when $\alpha = 1$ in above the mathematical formula (1). Dotted arrows indicate the updating directions of the OOD samples when $\alpha = 0$ in the above mathematical formula (1). Dot-and-dash arrows indicate the updating directions suitable for updating the OOD samples. In updating an OOD sample, it is preferable to update the OOD sample in a direction away from the classification boundary. In other words, it is preferable to update an OOD sample in a direction in which the certainty factor is high.

As illustrated in FIG. 1, the OOD data generation unit 100 includes an OOD data candidate generation unit 101, an OOD data candidate update unit 102, and a classifier update unit 103.

The OOD data candidate generation unit 101 randomly generates OOD data candidates (pseudo data). Also, the OOD data candidate generation unit 101 randomly generates label data (pseudo label data) corresponding to the OOD data candidates.

The OOD data candidate update unit 102 updates the OOD data candidates in such directions as to reduce the loss L (such directions that the certainty factor becomes higher).

The OOD data candidate update unit 102 generates the out-of-distribution data by updating the OOD data candidates in such directions as to reduce the loss $L(x, t)$ of the outputs to be obtained by inputting the OOD data candidates (pseudo data: x) to a machine learning model.

The classifier update unit 103 updates the classifier so as to recognize the OOD candidate data as OOD. As a result, the classifier no longer classifies the peripheries of the OOD candidate data with a high certainty factor.

By updating the classifier (machine learning model) using the updated OOD candidate data, the classifier update unit 103 can impart robustness for the OOD data to the machine learning model.

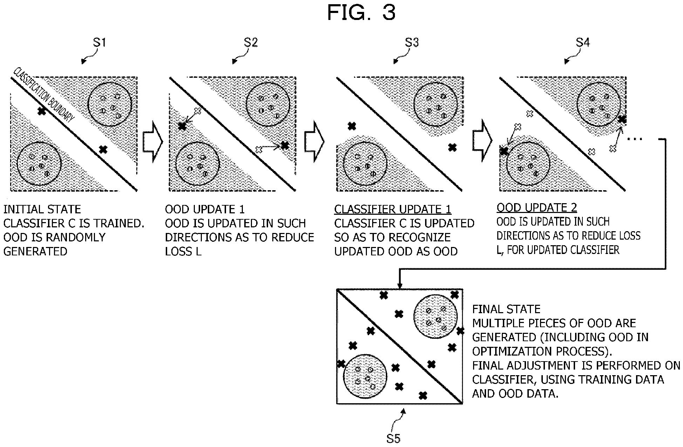

FIG. 3 is a diagram illustrating an example of the process of generating OOD samples in the information processing apparatus 1 as an example of the first embodiment.

Step S1 indicates an initial state. The classifier C is in a state where machine learning (training) has been performed thereon. The OOD data candidate generation unit 101 randomly generates OOD data candidates (pseudo data).

In step S2, the OOD data candidate update unit 102 updates the OOD data candidates in such directions as to reduce the loss L (such directions that the certainty factor becomes higher).

In step S3, the classifier update unit 103 updates the classifier C so that the OOD candidate data updated in step S2 is recognized as OOD. As a result, the classifier C no longer classifies the peripheries of the OOD candidate data with a high certainty factor.

In step S4, the OOD data candidate update unit 102 generates OOD data by updating the OOD candidate data in such directions as to reduce the loss L, for the classifier C updated in step S3. Thereafter, the processes in steps S2 to S4 are repeatedly performed.

For example, the processes in steps S2 to S4 may be repeatedly performed the number of times equivalent to a preset number of optimization steps.

Also, the OOD data candidate generation unit 101 generates a plurality of OOD data candidates (pseudo data), and the OOD data candidate update unit 102 and the classifier update unit 103 repeatedly perform the processes in steps S2 to S4 on the plurality of OOD data candidates (pseudo data).

For example, the OOD data candidate generation unit 101 may generate OOD data candidates (pseudo data) until a preset number of OOD samples is reached.

Step S5 indicates a final state. In this final state, the OOD data candidates (pseudo data) are treated as the OOD data (OOD samples). In FIG. 3, a plurality of pieces of OOD data is generated in step S5. The plurality of pieces of OOD data include OOD candidate data in the optimization process. The classifier update unit 103 performs final adjustment on the classifier C, using training data and the OOD data. In other words, the classifier update unit 103 trains the machine learning model (classifier) using the training data and the OOD candidate data, and updates a training parameter.

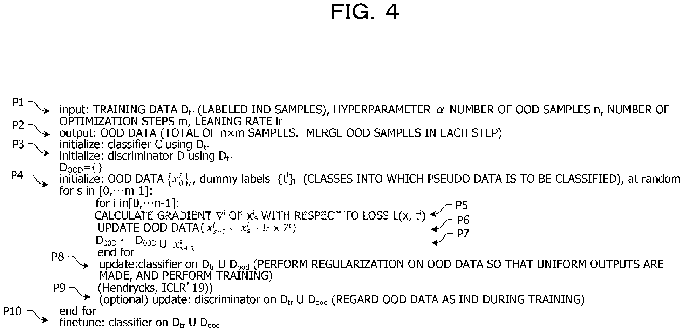

FIG. 4 is a diagram illustrating an example algorithm for processes to be performed by the OOD data generation unit 100 of the information processing apparatus 1 as an example of the first embodiment.

FIG. 4 illustrates a process of generating the OOD samples X^ by optimization in a program-like manner, and generates $\{x^{\wedge i}\}_i$ by optimizing L(x, t) from the initial value $\{x^i_0\}_i$.

The OOD data generation unit 100 receives an input of training data $D_{tr}$ (labeled IND samples), a hyperparameter o, the number of OOD samples n, the number of optimization steps m, and learning rate lr (see reference sign P1). The OOD data generation unit 100 merges OOD samples in each step, to output OOD data of a total of n × m samples (see reference sign P2).

In the initialization process, initialization of the classifier C and the discriminator D using the training data $D_{tr}$ is performed, respectively (see reference sign P3).

Also, the OOD data candidate generation unit 101 randomly generates OOD candidate data (OOD data, or pseudo data) $\{x^i_0\}_i$ and dummy labels $\{t'\}i$ (see reference sign P4). The dummy labels $\{t'\}i$ indicate the classes into which the pseudo data is to be classified.

The OOD data candidate update unit 102 calculates a gradient $\nabla^i$ of $x^i_s$ with respect to the loss L (x, $t_i$), for the OOD candidate data $x_i$ (see reference sign P5). The OOD data candidate update unit 102 calculates the gradient $\nabla^i$ of $x^i_s$ so that the loss L (x, t') becomes smaller. The OOD data candidate update unit 102 may calculate the gradient $\nabla^i$, using the gradient descent method, for example.

Also, the OOD data candidate update unit 102 updates the OOD data candidates, using the learning rate lr and the gradient $\nabla^i$ ($x^i_{s+1} \leftarrow x^i_s$ - lr × $\nabla^i$: see reference sign P6).

After that, the OOD data candidate update unit 102 adds the updated $x^i_{s+1}$ to a set $D_{OOD}$ of OOD data ($D_{OOD} \leftarrow D_{OOD} \cup x^i_{s+1}$: see reference sign P7).

These processes denoted by reference signs P5 to P7 are repeatedly performed (repetitive execution) for all (n) OOD samples and all the steps of the optimization step number m.

After that, the generated OOD data (OOD candidate data) is added to the training data $D_{tr}$, and the classifier update unit 103 updates the classifier C, using these pieces of data. This update of the classifier C is performed by regularizing OOD data so that uniform outputs are made and conducting training (see reference sign P8).

Note that the discriminator D may be updated with the training data $D_{tr}$ to which the generated OOD data (OOD candidate data) is added (see reference sign P9). The processed indicated by reference sign P9 may be performed as appropriate. The OOD data is also regarded as IND while machine learning is performed.

After that, final adjustment (fine tuning) of the classifier C is performed with the training data to which the generated OOD data (OOD candidate data) is added (see reference sign P10).

As described above, in the information processing apparatus 1 as an example of the first embodiment, the OOD data candidate update unit 102 updates the OOD data candidate generated by the OOD data candidate generation unit 101, so that the loss for the class is minimized.

As a result, OOD data for training with high completeness can be generated for the class determination model. Also, it is possible to generate OOD that is completely different from IND but is classified with a high certainty factor, which the classifier is not good at.

The classifier update unit 103 updates the classifier with the OOD data in the generation process that is updated by the OOD data candidate update unit 102. Thus, OOD data can be sequentially generated in an exploratory manner, and the OOD data can be efficiently generated.

Also, it is possible to enhance robustness of the machine learning model by preparing the generated OOD data and training the machine learning model.

With this information processing apparatus 1, data that cannot be recognized as out-of-distribution data by the current machine learning classifier can be generated in a simulative/exploratory manner. As OOD data candidates (pseudo data) are generated so as to oppose the classifier, data that is difficult for the classifier to recognize is generated in an exploratory manner. The classifier is then updated with the generated OOD data candidates, to impart robustness to the OOD data.

Also, by repeatedly performing generation of OOD data candidates (pseudo data) so as to oppose the classifier, and updating of the classifier with the generated OOD data candidates, it is possible to comprehensively generate OOD data, and enhance robustness of the machine learning model.

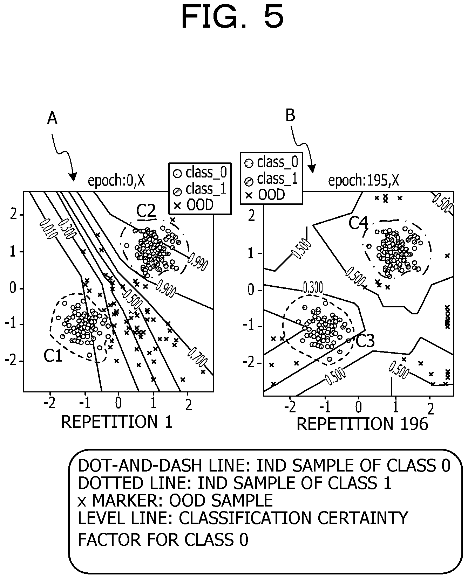

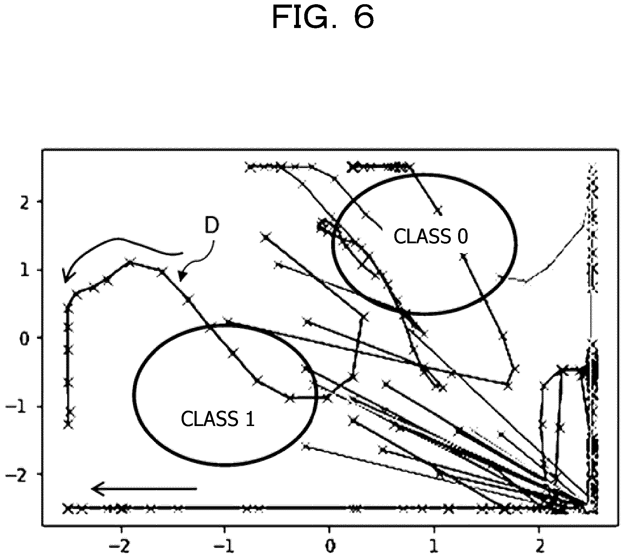

FIGs. 5 and 6 are diagrams illustrating results of simulations of OOD data generation processes by the OOD data generation unit 100 of the information processing apparatus 1 as an example of the first embodiment.

An example in which the training data $D_{tr} = \{(x^i, y^i)\}_i$ is defined as $y^i$ to {-1, 1} and x' to N($y^i$, 0.3$I_2$), $y^i$ = -1 is defined as class 0, and other data is defined as class 1 is now described.

FIG. 5 illustrates transitions of distribution of IND data and OOD data, in which reference sign A indicates a state at the time when the OOD data has been updated and optimized once, and reference sign B indicates a state at the time when the OOD data has been updated and optimized 196 times.

Also, in FIG. 5, point clouds (see reference signs C1 and C3) surrounded by dotted lines each indicate an IND sample of class 1, and point clouds (see reference signs C2 and C4) surrounded by dot-and-dash lines each indicate an IND sample of class 0. Further, level lines in the drawing indicate classification certainty factors for class 0.

FIG. 6 illustrates a process of generating some OOD samples among the OOD samples illustrated in FIG. 5, and each line represents a transition from an initial value of an OOD sample.

In FIG. 6, it can be seen that the OOD sample indicated by reference sign D moves (transitions) in a direction in which the certainty factor for class 1 becomes higher, and is different from IND, for example.

(B) Second Embodiment

In the first embodiment described above, a technique for generating OOD data by optimization has been described, but embodiments are not limited to this. In a second embodiment, generation of OOD data is performed with the use of an optimized OOD generation model.

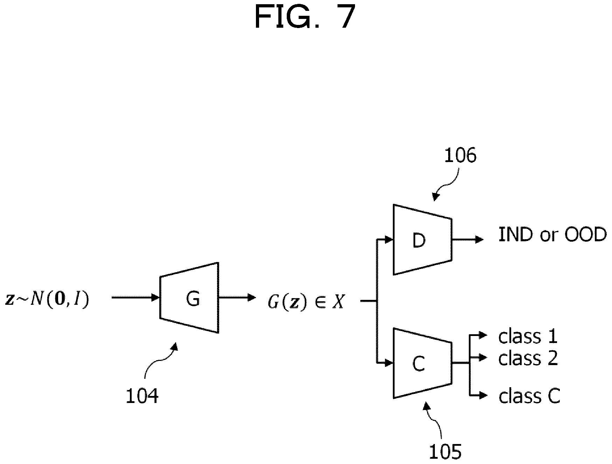

FIG. 7 is a diagram schematically illustrating an OOD generation model included in an information processing apparatus 1 as an example of the second embodiment.

An OOD generation model 104 is a neural network having a weight W, receives an input of data z, and outputs OOD data G(z).

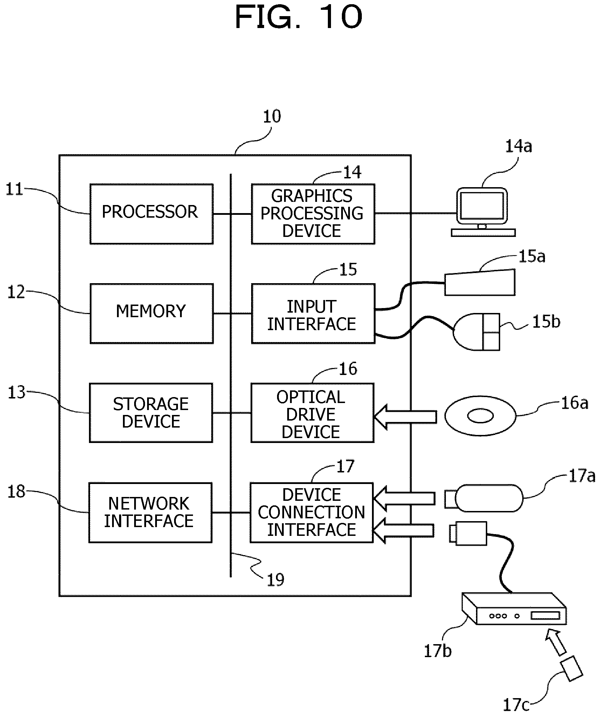

The neural network may be a hardware circuit, or may be a virtual network by software that connects between layers virtually constructed on a computer program by a processor 11 described later (see FIG. 10). A machine learning model may include the OOD generation model 104 and a classifier 105.

The OOD generation model 104 is trained (subjected to machine learning) by the classifier 105 so as to generate samples that have a high certainty factor and are different from IND.

In the example illustrated in FIG. 7, the data z to be input to the OOD generation model 104 is randomly acquired from a standard normal distribution N(0, I) having a mean of 0 and a standard deviation I. Further, an output of the OOD generation model 104 is $G(z) \in X$.

The output G(z) of the OOD generation model 104 is input to each of a discriminator 106 and the classifier 105. In the discriminator 106, machine learning is performed so that OOD is also regarded as IND. In the classifier 105, machine learning (training) is performed so that OOD can be recognized while IND is correctly identified. The OOD generation model 104 may be referred to as a generator. Also, the generator may be denoted by reference sign G.

Data (OOD data) generated by the OOD generation model 104 is input to each of the classifier 105 and the discriminator 106. The OOD data generated by the OOD generation model 104 corresponds to the first data to be input to the discriminator 106. The OOD generation model 104 corresponds to the generator that generates the first data.

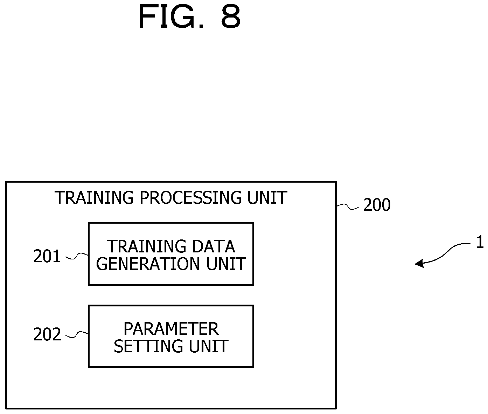

FIG. 8 is a diagram schematically illustrating the functional configuration of the information processing apparatus 1 as an example of the second embodiment.

The information processing apparatus 1 of the second embodiment has functions as a training processing unit 200.

The training processing unit 200 performs training (machine learning) on the OOD generation model 104, using a training data set.

As illustrated in FIG. 8, the training processing unit 200 includes a training data generation unit 201 and a parameter setting unit 202.

The training data generation unit 201 generates a plurality of pieces of training data. The plurality of pieces of training data may be referred to as the training data set. The training data includes OOD source data (pseudo data) and dummy labels. In the training of the OOD generation model 104, the OOD source data is used as the data to be input to the OOD generation model 104, and the dummy labels are used as correct data.

The training data generation unit 201 may randomly generate the OOD source data (pseudo data) and the dummy labels for the OOD source data, respectively. The OOD source data may be denoted by reference sign $\{z^i\}_i$. The dummy labels may be denoted by reference sign $\{t^i\}_i$.

The parameter setting unit 202 trains the OOD generation model 104, using the training data in which the OOD source data is input data, and the dummy label is correct data. For example, the parameter setting unit 202 updates the weight W (training parameter) of the OOD generation model 104 so as to reduce the sum of the loss $L(G(z^i), t^i)$, based on $G(z^i)$, which is the output obtained by inputting the OOD source data $z^i$ to the OOD data generation unit 100, the class obtained by inputting $G(z^i)$ to the classifier 105, and the dummy label t' which is correct data.

The parameter setting unit 202 may optimize the parameter by updating the parameters of the neural network in such a direction as to reduce the loss function that defines an error between a result of inference by the OOD generation model 104 for the training data and the correct data, using the gradient descent method, for example.

In the second embodiment, the OOD generation model 104 (generator G) is trained so as to oppose the classifier C.

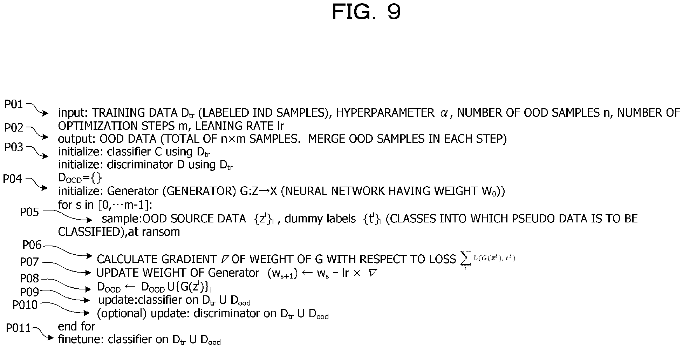

FIG. 9 is a diagram illustrating an example algorithm of an optimization process for the OOD generation model 104 in the information processing apparatus 1 as an example of the second embodiment.

FIG. 9 illustrates a process of optimizing the OOD generation model 104 in a program-like manner.

The OOD generation model 104 receives an input of training data $D_{tr}$ (labeled IND samples), a hyperparameter o, the number of OOD samples n, the number of optimization steps m, and learning rate lr (see reference sign P01). The OOD generation model 104 merges OOD samples in each step, to output OOD data of a total of $n \times m$ samples (see reference sign P02).

In the initialization process, initialization of the classifier C and the discriminator D using the training data $D_{tr}$ is performed, respectively (see reference sign P03).

Also, in the initialization process, the OOD generation model 104 (generator G) is initialized (see reference sign P04). The initial value of the weight W of the OOD generation model 104 is represented by $W_0$.

The training data generation unit 201 randomly generates the OOD source data $\{z^i\}_i$ and dummy labels $\{t'\}i$ (see reference sign P05). The dummy labels $\{t'\}i$ indicate the classes into which the pseudo data is to be classified.

The parameter setting unit 202 calculates the gradient V of the weight of the OOD generation model 104 (generator G) with respect to the loss $L(G(z^i), t^i)$ (see reference sign P06).

The parameter setting unit 202 updates the weight of the OOD generation model 104 (generator G), based on the calculated gradient V of the weight ($W_{s+1} \leftarrow W_s - lr \times \nabla$) (see reference sign P07).

After that, the output $\{G(z^i)\}_i$ of the OOD generation model 104 is added to the set $D_{OOD}$ of OOD ($D_{OOD} \leftarrow D_{OOD}$ u $\{G(z^i)\}_i$: see reference sign P08).

After that, the generated OOD data is added to the training data $D_{tr}$, and the classifier C is updated with these pieces of data. This update of the classifier C is performed by regularizing OOD data so that uniform outputs are made and conducting training (see reference sign P09).

Note that the discriminator D may be updated with the training data $D_{tr}$ to which the generated OOD data (OOD candidate data) is added (see reference sign P010). The OOD data is also regarded as IND while machine learning is performed.

These processes denoted by reference signs P05 to P010 are repeatedly performed (repetitive execution) for all the steps of the optimization step number m.

After that, final adjustment (fine tuning) of the classifier C is performed with the training data to which the generated OOD data (OOD candidate data) is added (see reference sign P011).

In this manner, in the information processing apparatus 1 as an example of the second embodiment, actions and effects similar to those of the first embodiment can be achieved.

(C) Others

FIG. 10 is a diagram illustrating an example of the hardware configuration of an information processing apparatus 1 as an example of an embodiment.

The information processing apparatus 1 is a computer, and includes, as its components, a processor 11, a memory 12, a storage device 13, a graphics processing device 14, an input interface 15, an optical drive device 16, a device coupling interface 17, and a network interface 18, for example. Those components 11 to 18 are designed to be able to communicate with one another via a bus 19.

The processor 11 is a control unit that controls the entire information processing apparatus 1. The processor 11 may be a multiprocessor. The processor 11 may be any one of a central processing unit (CPU), a micro processing unit (MPU), a digital signal processor (DSP), an application specific integrated circuit (ASIC), a programmable logic device (PLD), a field programmable gate array (FPGA), and a graphics processing unit (GPU), for example. Also, the processor 11 may be a combination of two or more kinds of components among a CPU, a MPU, a DSP, an ASIC, a PLD, a FPGA, and a GPU.

The processor 11 then executes a control program (a data generation program, not illustrated), to implement the functions as the OOD data generation unit 100 illustrated as an example in FIG. 1. Also, the processor 11 executes a control program (a machine learning program, not illustrated), to implement the functions as the training processing unit 200 illustrated as an example in FIG. 8.

Note that the information processing apparatus 1 implements the functions as the OOD data generation unit 100, by executing a program (a data generation program, or an OS program) recorded in a computer-readable non-transitory recording medium, for example. OS is an abbreviation for an operating system. Also, the information processing apparatus 1 implements the functions as the training processing unit 200, by executing a program (a machine learning program, or an OS program) recorded in a computer-readable non-transitory recording medium, for example.

The programs in which processing content to be executed by the information processing apparatus 1 is written may be recorded in various kinds of recording media. For example, the programs to be executed by the information processing apparatus 1 may be stored in the storage device 13. The processor 11 loads at least one of the programs in the storage device 13 into the memory 12, and executes the loaded program.

Also, the programs to be executed by the information processing apparatus 1 (processor 11) may be recorded in a non-transitory portable recording medium such as an optical disk 16a, a memory device 17a, or a memory card 17c. The programs stored in the portable recording medium may be executed after being installed into the storage device 13, under the control of the processor 11, for example. Also, the processor 11 may directly read a program from the portable recording medium, and execute the program.

The memory 12 is a storage memory including a read only memory (ROM) and a random access memory (RAM). The RAM of the memory 12 is used as the main storage unit of the information processing apparatus 1. The RAM temporarily stores at least one of the programs to be executed by the processor 11. Also, the memory 12 stores various kinds of data needed for processing by the processor 11.

The storage device 13 is a storage device such as a hard disk drive (HDD), a solid state drive (SSD), or a storage class memory (SCM), and stores various kinds of data. The storage device 13 is used as an auxiliary storage unit of the information processing apparatus 1.

The storage device 13 stores the OS program, control programs, and various kinds of data. The control programs include the data generation program and the machine learning program.

Note that a semiconductor memory device such as an SCM or a flash memory may be used as the auxiliary storage unit. Also, redundant arrays of inexpensive disks (RAID) may be formed with a plurality of storage devices 13.

The storage device 13 and the memory 12 may store OOD data generated by the OOD data generation unit 100, and various kinds of data and parameters generated by the OOD data candidate generation unit 101, the OOD data candidate update unit 102, and the classifier update unit 103 in the course of processing.

Also, the storage device 13 and the memory 12 may store OOD data generated by the OOD data generation unit 100, and various kinds of data and parameters generated by the OOD data candidate generation unit 101, the training data generation unit 201, and the parameter setting unit 202 in the course of processing.

The graphics processing device 14 is coupled to a monitor 14a. The graphics processing device 14 displays an image on a screen of the monitor 14a, in accordance with a command from the processor 11. Examples of the monitor 14a include a display device using a cathode ray tube (CRT), a liquid crystal display device, and the like.

The input interface 15 is coupled to a keyboard 15a and a mouse 15b. The input interface 15 transmits signals sent from the keyboard 15a and the mouse 15b to the processor 11. Note that the mouse 15b is an example of a pointing device, and some other pointing device may be used. Examples of other pointing devices include a touch panel, a tablet, a touch pad, a track ball, and the like.

The optical drive device 16 reads data recorded on the optical disk 16a, using laser light or the like. The optical disk 16a is a non-transitory portable recording medium in which data is recorded so as to be read by reflection of light. Examples of the optical disk 16a include a digital versatile disc (DVD), a DVD-RAM, a compact disc read only memory (CD-ROM), a CD-recordable (R)/rewritable (RW), and the like.

The device coupling interface 17 is a communication interface for coupling a peripheral device to the information processing apparatus 1. For example, the memory device 17a and a memory reader/writer 17b may be coupled to the device coupling interface 17. The memory device 17a is a non-transitory recording medium equipped with a function of communicating with the device coupling interface 17, and may be a universal serial bus (USB) memory, for example. The memory reader/writer 17b writes data into the memory card 17c, or reads data from the memory card 17c. The memory card 17c is a card-type non-transitory recording medium.

The network interface 18 is connected to a network. The network interface 18 transmits and receives data via the network. Other information processing apparatuses, communication devices, and the like may be connected to the network.

Further, the disclosed technology is not limited to the embodiments described above, and various modifications may be made and implemented in a range without departing from the scope of the embodiments. Each configuration and each process of the embodiments may be selected or omitted as needed, or may be appropriately combined.

For example, in the examples described in the above respective embodiments, the classifier performs two-class determination to classify input data into two classes, but embodiments are not limited to this. The classifier may perform multi-class determination for classifying input data into three or more classes, and may modify and perform the multi-class determination as appropriate.

Also, in the examples described in the above embodiments, data to be processed is image data. However, embodiments are not limited to this, and the above examples can be applied to various kinds of data such as tabular data and text data. For example, data (tabular data) in which physical information including height, weight, and the like is summarized in a tabular form may be used in conjunction with a technique for determining whether the subject is likely to contract a specific disease.

Furthermore, those skilled in the art can carry out or manufacture the embodiments according to the above disclosure.

CITATION LIST

PATENT DOCUMENT

Patent Document 1: Japanese National Publication of International Patent Application No. 2018-529157
Patent Document 2: Japanese Laid-open Patent Publication No. 2020-123830
Patent Document 3: U.S. Patent Application Publication No. 2021/0182731

REFERENCE SIGNS LIST

information processing apparatus

| 11 | processor (control unit) |
| 12 | memory |
| 13 | storage device |
| 14 | graphics processing device |
| 14a | monitor |
| 15 | input interface |
| 15a | keyboard |
| 15b | mouse |
| 16 | optical drive device |
| 16a | optical disk |
| 17 | device coupling interface |
| 17a | memory device |
| 17b | memory reader/writer |
| 17c | memory card |
| 18 | network interface |
| 18a | network |
| 19 | bus |
| 100 | OOD data generation unit |
| 101 | OOD data candidate generation unit |
| 102 | OOD data candidate update unit |
| 103 | classifier update unit |
| 104 | OOD generation model |
| 105 | classifier |
| 106 | discriminator |
| 200 | training processing unit |
| 201 | training data generation unit |
| 202 | parameter setting unit |

**Claims**

1. A data generation method implemented by a computer, the data generation method comprising:

   generating pseudo data and pseudo label data for the pseudo data; and
   updating the pseudo data in a direction for reducing a loss of an output obtained by inputting the pseudo data to a machine learning model, to generate out-of-distribution data not included in a specific domain.

2. The data generation method according to claim 1, the data generation method further comprising:
   updating a classifier included in the machine learning model, using the updated pseudo data.

3. The data generation method according to claim 2, the data generation method further comprising:
   repeating, a plurality of times, a process of updating the pseudo data and a process of updating the classifier.

4. A machine learning method implemented by a computer, the machine learning method comprising:

   when training a machine learning model that includes a generator that generates first data to be input to a classifier that performs out-of-distribution determination as to whether input data is included in a specific domain, generating training data that includes pseudo data and pseudo label data for the pseudo data;
   calculating a weight gradient of the generator to reduce a loss of an output obtained by inputting the pseudo data to the generator; and
   updating a parameter of the generator, based on the calculated weight gradient.

5. The machine learning method according to claim 4, the machine learning method further comprising:
   updating the classifier included in the machine learning model, using the first data generated by inputting the pseudo data to the generator.

6. The machine learning method according to claim 5, wherein the computer repeatedly performs, a plurality of times, a process of updating the pseudo data and a process of updating the classifier.

7. An information processing apparatus comprising a control unit configured to perform processing comprising:

   generating pseudo data and pseudo label data for the pseudo data; and
   updating the pseudo data in a direction for reducing a loss of an output obtained by inputting the pseudo data to a machine learning model, to generate out-of-distribution data not included in a specific domain.

8. The information processing apparatus according to claim 7, wherein
   the control unit performs a process of updating a classifier included in the machine learning model, using the updated pseudo data.

9. The information processing apparatus according to claim 8, wherein
   the control unit repeats, a plurality of times, a process of updating the pseudo data and a process of updating the classifier.

10. An information processing apparatus comprising a control unit configured to perform processing comprising: when training a machine learning model that includes a generator that generates first data to be input to a classifier that performs out-of-distribution determination as to whether input data is included in a specific domain,

    generating training data that includes pseudo data and pseudo label data for the pseudo data;
    calculating a weight gradient of the generator to reduce a loss of an output obtained by inputting the pseudo data to the generator; and
    updating a parameter of the generator, based on the calculated weight gradient.

11. The information processing apparatus according to claim 10, wherein
    the control unit performs a process of updating the classifier included in the machine learning model, using the first data generated by inputting the pseudo data to the generator.

12. The information processing apparatus according to claim 11, wherein the control unit repeatedly performs, a plurality of times, a process of updating the pseudo data and a process of updating the classifier.

13. A data generation program for causing a computer to perform processing comprising:

    generating pseudo data and pseudo label data for the pseudo data; and
    updating the pseudo data in a direction for reducing a loss of an output obtained by inputting the pseudo data to a machine learning model, to generate out-of-distribution data not included in a specific domain.

14. The data generation program according to claim 13, the processing further comprising:
    updating a classifier included in the machine learning model, using the updated pseudo data.

15. The data generation program according to claim 14, the processing further comprising:
    causing the computer to repeat, a plurality of times, a process of updating the pseudo data and a process of updating the classifier.

**16.** A machine learning program for causing a computer to perform processing comprising:

when training a machine learning model that includes a generator that generates first data to be input to a classifier that performs out-of-distribution determination as to whether input data is included in a specific domain, generating training data that includes pseudo data and pseudo label data for the pseudo data; calculating a weight gradient of the generator to reduce a loss of an output obtained by inputting the pseudo data to the generator; and updating a parameter of the generator, based on the calculated weight gradient.

**17.** The machine learning program according to claim 16, the processing further comprising: updating the classifier included in the machine learning model, using the first data generated by inputting the pseudo data to the generator.

**18.** The machine learning program according to claim 17, wherein the processing further comprising: causing the computer to repeatedly perform, a plurality of times, a process of updating the pseudo data and a process of updating the classifier.

# FIG. 1

OOD DATA GENERATION UNIT ⌇ 100

101 ⌇ OOD DATA CANDIDATE GENERATION UNIT

102 ⌇ OOD DATA CANDIDATE UPDATE UNIT

103 ⌇ CLASSIFIER UPDATE UNIT

1

# FIG. 2

CLASS 0

CLASS 1

CLASSIFICATION
BOUNDARY

| | INITIAL VALUE |
| --- | --- |
| ← | UPDATING DIRECTION WHEN $\alpha = 1$ |
| ← ···· | UPDATING DIRECTION WHEN $\alpha = 0$ |
| ← · — | CORRECT UPDATING DIRECTION ($\alpha \in (0,1)$) |

# FIG. 3

**S1**
INITIAL STATE
CLASSIFIER C IS TRAINED.
OOD IS RANDOMLY
GENERATED

**S2**
OOD UPDATE 1
OOD IS UPDATED IN SUCH
DIRECTIONS AS TO REDUCE
LOSS L

**S3**
CLASSIFIER UPDATE 1
CLASSIFIER C IS UPDATED
SO AS TO RECOGNIZE
UPDATED OOD AS OOD

**S4**
OOD UPDATE 2
OOD IS UPDATED IN SUCH
DIRECTIONS AS TO REDUCE LOSS
L, FOR UPDATED CLASSIFIER

**S5**
FINAL STATE
MULTIPLE PIECES OF OOD ARE
GENERATED (INCLUDING OOD IN
OPTIMIZATION PROCESS).
FINAL ADJUSTMENT IS PERFORMED ON
CLASSIFIER, USING TRAINING DATA
AND OOD DATA.

# FIG. 4

P1 — input: TRAINING DATA $D_{tr}$ (LABELED IND SAMPLES), HYPERPARAMETER $\alpha$ NUMBER OF OOD SAMPLES n, NUMBER OF
OPTIMIZATION STEPS m, LEANING RATE lr
P2 — output: OOD DATA (TOTAL OF n×m SAMPLES. MERGE OOD SAMPLES IN EACH STEP)
P3 — initialize: classifier C using $D_{tr}$
initialize: discriminator D using $D_{tr}$
$D_{OOD}=\{\}$
P4 — initialize: OOD DATA $\{x_0^i\}_i$, dummy labels $\{t^i\}_i$ (CLASSES INTO WHICH PSEUDO DATA IS TO BE CLASSIFIED), at random
for s in $[0,\cdots m-1]$:
    for i in$[0,\cdots n-1]$:
    CALCULATE GRADIENT $\nabla^i$ OF $x_s^i$ WITH RESPECT TO LOSS $L(x, t^i)$ — P5
    UPDATE OOD DATA($x_{s+1}^i \leftarrow x_s^i - lr \times \nabla^i$) — P6
    $D_{OOD} \leftarrow D_{OOD} \cup x_{s+1}^i$ — P7
    end for
P8 — update:classifier on $D_{tr}$ U $D_{ood}$ (PERFORM REGULARIZATION ON OOD DATA SO THAT UNIFORM OUTPUTS ARE
MADE, AND PERFORM TRAINING)
P9 — (Hendrycks, ICLR'19))
    (optional) update: discriminator on $D_{tr}$ U $D_{ood}$ (REGARD OOD DATA AS IND DURING TRAINING)
P10 — end for
finetune: classifier on $D_{tr}$ U $D_{ood}$

# FIG. 5

DOT-AND-DASH LINE: IND SAMPLE OF CLASS 0
DOTTED LINE: IND SAMPLE OF CLASS 1
x MARKER: OOD SAMPLE
LEVEL LINE: CLASSIFICATION CERTAINTY
FACTOR FOR CLASS 0

FIG. 6

# FIG. 7

$$z \sim N(\mathbf{0}, I) \longrightarrow \boxed{G} \longrightarrow G(z) \in X$$

106

D → IND or OOD

104

C → class 1 / class 2 / class C

105

# FIG. 8

TRAINING PROCESSING UNIT ⌇ 200

201 ⌇ TRAINING DATA
GENERATION UNIT

202 ⌇ PARAMETER
SETTING UNIT

1

# FIG. 9

P01 input: TRAINING DATA $D_{tr}$ (LABELED IND SAMPLES), HYPERPARAMETER $\alpha$, NUMBER OF OOD SAMPLES n, NUMBER OF OPTIMIZATION STEPS m, LEANING RATE lr

P02 output: OOD DATA (TOTAL OF n×m SAMPLES. MERGE OOD SAMPLES IN EACH STEP)

P03 initialize: classifier C using $D_{tr}$
initialize: discriminator D using $D_{tr}$

P04 $D_{OOD}=\{\}$
initialize: Generator (GENERATOR) G:Z→X (NEURAL NETWORK HAVING WEIGHT $W_0$))

for s in [0,···m-1]:

P05 sample:OOD SOURCE DATA $\{z^i\}_i$ , dummy labels $\{t^i\}_i$ (CLASSES INTO WHICH PSEUDO DATA IS TO BE CLASSIFIED),at ransom

P06

P07 CALCULATE GRADIENT $\nabla$ OF WEIGHT OF G WITH RESPECT TO LOSS $\sum_i L(G(z^i), t^i)$

P08 UPDATE WEIGHT OF Generator $(w_{s+1}) \leftarrow w_s - lr \times \nabla$

P09 $D_{OOD} \leftarrow D_{OOD} \cup \{G(z^i)\}_i$

P010 update:classifier on $D_{tr} \cup D_{ood}$

(optional) update: discriminator on $D_{tr} \cup D_{ood}$

P011 end for
finetune: classifier on $D_{tr} \cup D_{ood}$

# FIG. 10

## INTERNATIONAL SEARCH REPORT

| | International application No. |
|---|---|
| | **PCT/JP2021/048702** |

**A.    CLASSIFICATION OF SUBJECT MATTER**

*G06N 20/00*(2019.01)i
FI:    G06N20/00 130

According to International Patent Classification (IPC) or to both national classification and IPC

**B.    FIELDS SEARCHED**

Minimum documentation searched (classification system followed by classification symbols)

G06N3/00-20/00;

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | TANG, Keke et al. CODEs: Chamfer Out-of-Distribution Examples against Overconfidence Issue, arxiv [online], 13 August 2021 [retrieved on 04 March 2022], all 10 pages, Retrieved from the Internet: <URL: https://arxiv.org/abs/2108.06024> in particular, 4. Method, 5. Experiments | 1-3, 7-9, 13-15 |
| A | entire text | 4-6, 10-12, 16-18 |

☐ Further documents are listed in the continuation of Box C.    ☐ See patent family annex.

| | | |
|---|---|---|
| *    Special categories of cited documents: | "T" | later document published after the international filing date or priority date and not in conflict with the application but cited to understand the principle or theory underlying the invention |
| "A"    document defining the general state of the art which is not considered to be of particular relevance | "X" | document of particular relevance; the claimed invention cannot be considered novel or cannot be considered to involve an inventive step when the document is taken alone |
| "E"    earlier application or patent but published on or after the international filing date | | |
| "L"    document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"    document referring to an oral disclosure, use, exhibition or other means | "&" | document member of the same patent family |
| "P"    document published prior to the international filing date but later than the priority date claimed | | |

| Date of the actual completion of the international search | Date of mailing of the international search report |
|---|---|
| **04 March 2022** | **15 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**REFERENCES CITED IN THE DESCRIPTION**

**Patent documents cited in the description**

- JP 2018529157 A
- JP 2020123830 A
- US 20210182731